# EUROPEAN PATENT APPLICATION

(11) **EP 2 101 525 A1**
(43) Date of publication of application: **16.09.2009**
(21) Application number: 09155052.5
(22) Date of filing: 12.03.2009
(51) Int. Cl.: H04W 4/22, H04L 29/06

(54) **Gateway router and priority control for emergency call in IP telephony system**

(30) Priority: 13.03.2008 JP 2008063482
(71) Applicant: NEC Corporation, Minato-ku Tokyo (JP)
(72) Inventor: Philavong, Minaxay, Tokyo (JP)
(74) Representative: Betten & Resch

(57) **Abstract**

A gateway router in an IP telephony system includes a determination section which determines whether or not an arriving session control signal is of an emergency call, and a controller which dynamically assigns to emergency calls and other general calls a predetermined number of sessions that can be simultaneously connected and thereby performs control such that connection processing is carried out preferentially for a session control signal of an emergency call.

## Description

This application is based upon and claims the benefit of priority from Japanese Patent Application No. 2008-063482, filed on March 13, 2008, the disclosure of which is incorporated herein in its entirety by reference.

The present invention relates to an IP (Internet Protocol) telephony system utilizing an IP network and, more particularly, to a gateway router and a method for preferentially controlling an emergency call in the IP telephony system.

As IP telephones proliferate, the problems arise of how to ensure communication quality and how to handle an emergency call, or a priority call, when a large number of calls are occurring. Various solutions for the problems have been proposed.

For example, Japanese Patent Application Unexamined Publication No. 2006-203596 discloses an IP telephony system in which a call control management device, upon receipt of a request to make a call to a prioritized callee registered in advance, instructs a router device to secure a dedicated band required, thereby attempting to establish a prompt and reliable connection of the call.

Moreover, Japanese Patent Application Unexamined Publication No. 2006-186855 also discloses an IP telephony system in which priority calls and general (or ordinary) calls other than priority calls are divided, respective bandwidths for the priority calls and the general calls are secured independently of each other, and routing is performed so that the priority calls are routed to an emergency/priority call control server which is different from a general call control server, whereby speech communication quality is stabilized.

Furthermore, Japanese Patent Application Unexamined Publication No. 2007-243557 also discloses an IP telephony system in which a terminal-accommodating device monitors the total number of telephone calls and rejects a request to make a new telephone call when the total number of telephone calls has reached a predetermined number, whereby voice quality is prevented from degrading when many telephone communication sessions are simultaneously established.

However, in the above-described IP telephony systems proposed in Japanese Patent Application Unexamined Publication Nos. 2006-203596 and 2006-186855, when the band for priority calls are occupied, another priority call cannot be accepted. In the IP telephony system disclosed in Japanese Patent Application Unexamined Publication No. 2007-243557, when the total number of telephone calls has reached the predetermined number, a new call cannot be accepted because a request to make a new call is rejected.

As described above, in the above-described IP telephony systems, a new call cannot be accepted when congestion has occurred in a network, or when the number of sessions has reached a maximum number of sessions that a call processing server can handle. This may cause a situation where users cannot make an emergency call to the police, fire department, or the like.

Accordingly, an object of the present invention is to provide an IP telephony system that enables an emergency call to be preferentially connected even when congestion is occurring or when the number or sessions has reached the upper limit of capacity, as well as a gateway device and a method for preferentially controlling an emergency call in the IP telephony system.

According to the present invention, a gateway device in an Internet Protocol telephony system, includes: a determination section for determining whether a received session control signal is of an emergency call; and a controller for dynamically assigning a predetermined number of simultaneously available sessions to emergency calls and general calls other than the emergency calls so as to preferentially perform connection of a received session control signal of an emergency call.

According to the present invention, a priority control method for emergency calls in a gateway device for connecting a plurality of telephone terminals in an Internet Protocol telephony system, includes: determining whether a session control signal received from a telephone terminal is of an emergency call; and preferentially connecting a received session control signal of the emergency call by dynamically assigning a predetermined number of simultaneously available sessions to emergency calls and general calls other than the emergency calls.

According to the present invention, an Internet Protocol telephony system including a gateway device which comprises: a determination section for determining whether a received session control signal is of an emergency call; and a controller for dynamically assigning a predetermined number of simultaneously available sessions to emergency calls and general calls other than the emergency calls so as to preferentially perform connection of a received session control signal of an emergency call.

According to the present invention, it is possible to preferentially connect an emergency call even when congestion is occurring or when the number of sessions has reached the upper limit of capacity.
FIG. 1A is a network diagram showing a general structure of an IP telephony system.
FIG. 1B is a diagram showing an example of the header of an INVITE request.
FIG. 2 is a block diagram showing a functional configuration of a gateway router, relating to control signal processing, according to an exemplary embodiment of the present invention.
FIG. 3 is a flowchart showing the session classification operation of the gateway router shown in FIG. 2.
FIG. 4 is a flowchart showing the priority control of an emergency call performed by the gateway router shown in FIG. 2.
FIG. 5 is a block diagram showing a specific example of an implementation of the gateway router shown in FIG. 2.

Hereinafter, an IP telephony system and a gateway router used therein according to an exemplary embodiment of the present invention will be described in detail by taking the session initiation protocol (SIP) as an example of a protocol for implementing a call setup function of a telephone on an IP network.

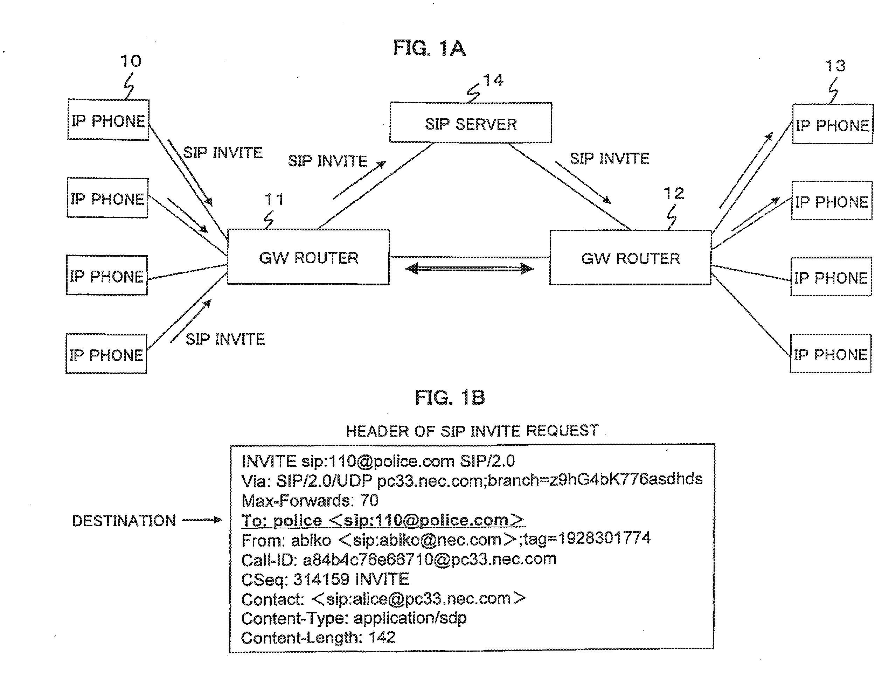

FIG. 1A is a network diagram showing a general structure of an IP telephony system, and FIG. 1B is a diagram showing an example of the header of an INVITE request. Here, it is assumed that a control signal (INVITE request) for establishing a session issued by an IP telephone terminal 10 is transferred through a gateway router 11, a SIP server 14, and a gateway router 12 and then arrives at an IP telephone terminal 13 on the called side.

Each of the gateway routers 11 and 12 has a function of forwarding an INVEITE request issued by an IP telephone terminal to the SIP server 14, as well as a function of managing already-established sessions, a function of collecting voice data exchanged over established sessions between IP telephone terminals, and the like. In the INVEITE request, a destination is specified in the header in the form of "To: ..." as shown as an example in FIG. 1B.

As mentioned already, at the time of a disaster or the like, it is conceivable that calls from a large number of IP telephone terminals occur and many control signals are sent to the SIP server 14 through gateway routers. In this case, when the SIP server 14 has reached the upper limit of its capacity for processing sessions, a session for a new call cannot be established.

In the IP telephony system according to the present exemplary embodiment, control for preferentially connecting an emergency call is performed at a gateway router, with attention directed to the fact that control signals from IP telephone terminals are transferred through gateway routers. In each gateway router, which will be described next, the number of sessions that can be set by the gateway router is restricted so that the maximum number of simultaneous connections in the SIP telephony system is not exceeded. The gateway router also determines, based on a control signal issued by an IP telephone terminal, whether or not the call is an emergency call and, when it is an emergency call, performs connection processing more preferentially for the emergency call than for general calls with lower priorities. Hereinafter, this will be described specifically.

### 1. Configuration of gateway router

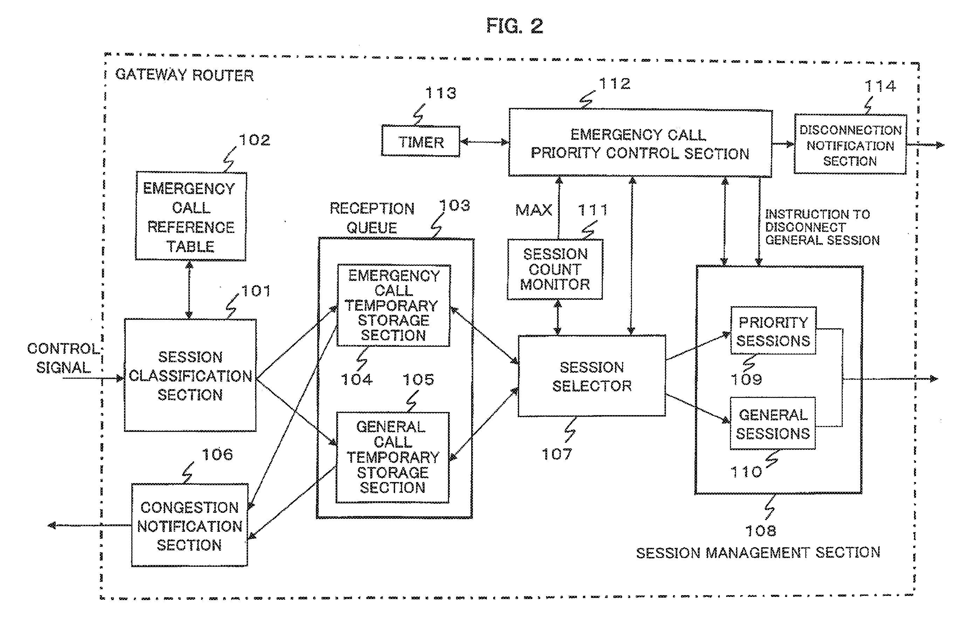

FIG. 2 is a block diagram showing a functional configuration of a gateway router, relating to control signal processing, according to the exemplary embodiment of the present invention. Here, shown is a functional configuration of a control system relating to control signal processing, and the functional configuration excerpt a memory can be implemented by executing programs on a program-controlled processor such as a Central Processing Unit (CPU).

The gateway router includes a session classification section 101, an emergency call reference table 102, and a reception queue 103. The reception queue 103 is provided with an emergency call temporary storage section 104 and a general call temporary storage section 105. The session classification section 101, while referring to the emergency call reference table 102, classifies all control signals issued by IP telephone terminals into two categories: emergency-call and general-call. Specifically, the session classification section 101 outputs a control signal to the emergency call temporary storage section 104 when the control signal is of an emergency call, and outputs a control signal to the general call temporary storage section 105 when the control signal is of a general call.

In the emergency call reference table 102, registered in advance is identification information on emergency/priority calls with higher priorities. Examples of registered destinations are the destinations of control signals with urgency such as, in Japan for example, a 110 call to the police and a 119 call to the fire department. The session classification section 101 checks the destination of an INVITE request received (see FIG. 1B) and determines whether the control signal (INVITE request) is of a registered emergency call or of a general call other than the registered emergency calls.

However, the session classification section 101 rejects a received INVITE request when a corresponding one of the emergency call temporary storage section 104 and the general call temporary storage section 105 is over the limit of acceptance, and notifies the state of congestion to the caller through a congestion notification section 106.

A session selector 107 selects a call from the emergency call temporary storage section 104 and the general call temporary storage section 105 and then establishes a session for the call. In this event, however, the session selector 107 selects a call preferentially from the emergency call temporary storage section 104 and establishes a session for the call, which will be described later. Thus, emergency-call sessions and general-call sessions are managed as priority sessions 109 and general sessions 110, respectively, in a session management section 108.

Moreover, a session count monitor 111 counts the sessions for those calls selected by the session selector 107 and determines whether or not the count has reached the maximum number of sessions that can be simultaneously connected by the gateway router in question. Here, the maximum number of sessions that can be simultaneously connected is the sum total of the number of emergency-call sessions that can be simultaneously connected and the number of general-call sessions that can be simultaneously connected. When the number of connected sessions has reached the maximum number of sessions that can be simultaneously connected by the getaway router, the session count monitor 111 outputs a notification to that effect to an emergency call priority control section 112.

When an INVITE request for an emergency call is in the reception queue 103 in a state where the number of connected sessions has reached the maximum number of sessions that can be simultaneously connected by the getaway router, then the emergency call priority control section 112 starts control for disconnecting a general session. Specifically, after a predetermined length of time has passed on a timer 113, the emergency call priority control section 112 instructs the session management section 108 to disconnect a session of a lower-priority general call and instructs the session selector 107 to preferentially connect the newly arriving emergency call.

There are various conceivable criteria for selecting a general session to be disconnected. For example, it is possible to adopt a criterion by which, of the general sessions, a session that has been connected for the longest time is disconnected sequentially (that is, in order of age). Alternatively, if priorities can be determined on a time-of-day basis, regional basis, or the like, it is possible to select a general session with the lowest priority.

Incidentally, before a general session is disconnected, it is preferable that the emergency call priority control section 112 send an advance notification of disconnection, through a disconnection notification section 114, to the IP telephone terminals between which the general session in question is established. When a session or sessions are disconnected or finished, the session management section 108 gives feedback to the session count monitor section 111, which then reduces the number of the counted sessions by the number of the disconnected/finished sessions.

As described above, an arriving call is classified as an emergency call or a general call, whereby at the time of a disaster or upon the occurrence of network congestion, a higher-priority call to the police, fire department, or the like can be preferentially selected and a session for the call can be established. Moreover, the number of sessions is managed, whereby even when the number of sessions has reached during congestion the maximum number of sessions that can be simultaneously connected, as many sessions as required are made available by disconnecting sessions of lower-priority general calls and these sessions made available are assigned to emergency calls. Thus, an emergency call can be connected more preferentially than a general call.

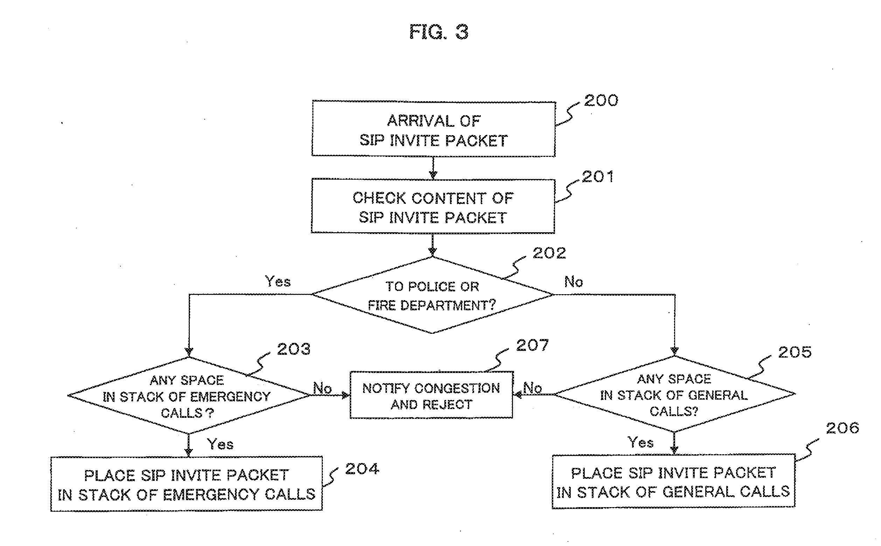

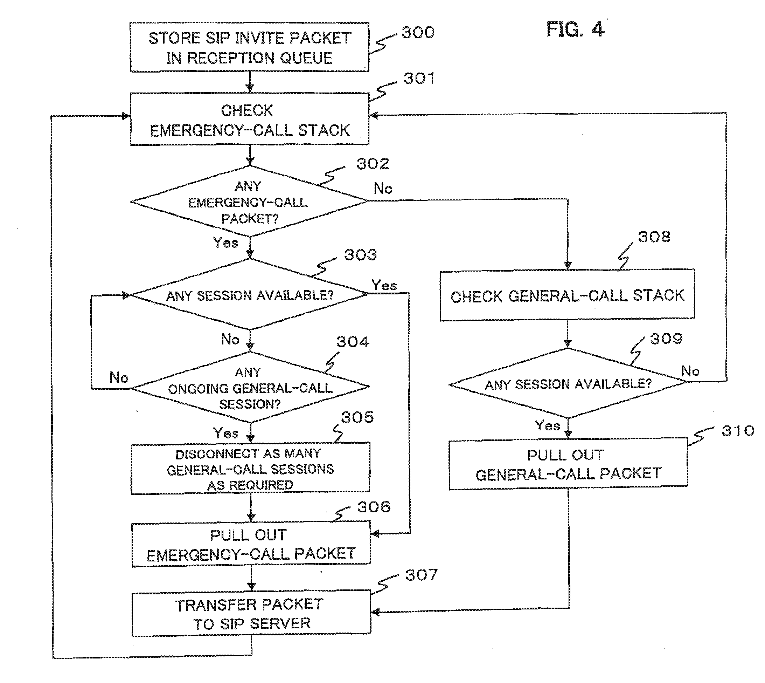

Next, a description will be given of operations performed when an INVITE packet has arrived at the gateway router, with reference to the flowcharts of FIGS. 3 and 4.

### 2. Classification operation

FIG. 3 is a flowchart showing the session classification operation of the gateway router shown in FIG. 2. Here as an example, it is assumed that the police and the fire department are registered in advance as destinations of emergency calls in the emergency call reference table 102.

First, it is assumed that, to establish a session, an IP telephone terminal 10 transmits an INVITE packet, which arrives at the gateway router 11 (Step 200). The session classification section 101 of the gateway router 11 reads out the destination part of the arriving INVITE packet and searches the emergency call reference table 102 for the read-out destination, thereby determining whether the INVITE packet is of an emergency call or of a general call (Steps 201 and 202).

When the destination of the arriving INVITE packet is the police or the fire department (Step 202: Yes), the session classification section 101 checks the availability of the emergency call temporary storage section 104 of the reception queue 103 (Step 203). If there is an available space in the emergency call temporary storage section 104 (Step 203: Yes), the session classification section 101 stores the arriving INVITE packet in the emergency call temporary storage section 104 on a FIFO (first-in, first-out) basis (Step 204).

On the other hand, when the session classification section 101 determines that the arriving INVITE packet is not of an emergency call (Step 202: No), the session classification section 101 checks the availability of the general call temporary storage section 105 (Step 205) and, if there is an available space (Step 205: Yes), stores the arriving INVITE packet in the general call temporary storage section 105 (Step 206).

If the stack capacity of the emergency call temporary storage section 104 or general call temporary storage section 105 is exceeded (Step 203 or 205: No), the arriving INVITE packet cannot be accepted. Therefore, the congestion notification section 106 notifies the state of congestion to the IP telephone terminal 10 that is the originator of the INVEITE packet in question, and rejects the connection request temporarily (Step 207).

### 3. Priority control of emergency calls

FIG. 4 is a flowchart showing the priority control of an emergency call performed by the gateway router shown in FIG. 2. Here, it is assumed that, to establish a session, an IP telephone terminal transmits an INVITE packet, which arrives at the gateway router 11 and is stored in the emergency call temporary storage section 104 or general call temporary storage section 105 of the reception queue 103 (Step 300).

When the INVITE packet is stored in the reception queue 103, the session selector 107 first checks the emergency call temporary storage section 104, where higher-priority emergency calls are stored (Step 301), and determines whether or not any emergency-call packet is stored therein (Step 302). When an emergency-call packet is in the emergency call temporary storage section 104 (Step 302: Yes), the emergency call priority control section 112 determines, based on the count made by the session count monitor 111, whether or not a session can be further reserved (Step 303).

When a further session is available (Step 303: Yes), the session selector 107, under the control of the emergency call priority control section 112, pulls out the INVITE packet of the emergency call from the emergency call temporary storage section 104 (Step 306) and transfers the INVITE packet to the SIP server 14 (Step 307). When the INVITE packet is transferred to the SIP server 14, the control process goes back to Step 301.

In a case where the count made by the session count monitor section 111 has reached the maximum number of sessions that can be simultaneously connected and therefore a further session cannot be created (Step 303: No), the emergency call priority control section 112 checks whether or not the session management section 108 has a general-call session currently connected (Step 304). When there is a general-call session currently connected (Step 304: Yes), the emergency call priority control section 112 requests the session management section 108 to disconnect at least one general-call session (Step 305).

Since a session becomes available when the general-call session has been disconnected, the session selector 107, under the control of the emergency call priority control section 112, pulls out the INVITE packet of the emergency call from the emergency call temporary storage section 104 (Step 306) and transfers the INVITE packet to the SIP server 14 (Step 307). When the INVITE packet is transferred to the SIP server 14, the control process goes back to Step 301. As described above, a session is secured for an emergency call by disconnecting a general-call session, whereby it is possible to dynamically assign a limited number of sessions that can be processed, and it is thus possible to realize priority control of emergency calls.

When a session of a general call is disconnected, it is possible to reconnect the general call if the disconnected general call is stored on the top of the stack in the general call temporary storage section 105 of the reception queue 103.

Incidentally, in a case where the count made by the session count monitor section 111 has reached the maximum number of sessions that can be simultaneously connected and all of the sessions are emergency-call sessions (Step 304: No), the gateway router 11 cannot establish any more session. Accordingly, the new INVITE packet of the emergency call is held in the emergency call temporary storage section 104 and waits until a session becomes available.

On the other hand, with respect to a general call, when the session selector 107 confirms that there is no packet of a higher-priority emergency call (Step 302: No) and then confirms that a packet of a general call is in the general call temporary storage section 105 (Step 308), the emergency call priority control section 112 determines, based on the count made by the session count monitor section 111, whether or not another session can be reserved (Step 309). When any session is available (Step 309: Yes), the session selector 107 pulls out the INVITE packet from the general call temporary storage section 105 (Step 310) and transfers the INVITE packet to the SIP server 14 (Step 307). When the INVITE packet is transferred to the SIP server 14, the control process goes back to Step 301.

When there is no available session (Step 309: No), the control process goes back to Step 301. That is, in the case of a general call, if there is no available session, the general call waits until a session becomes available under the preferential control of an emergency call.

### 4. Implementation example

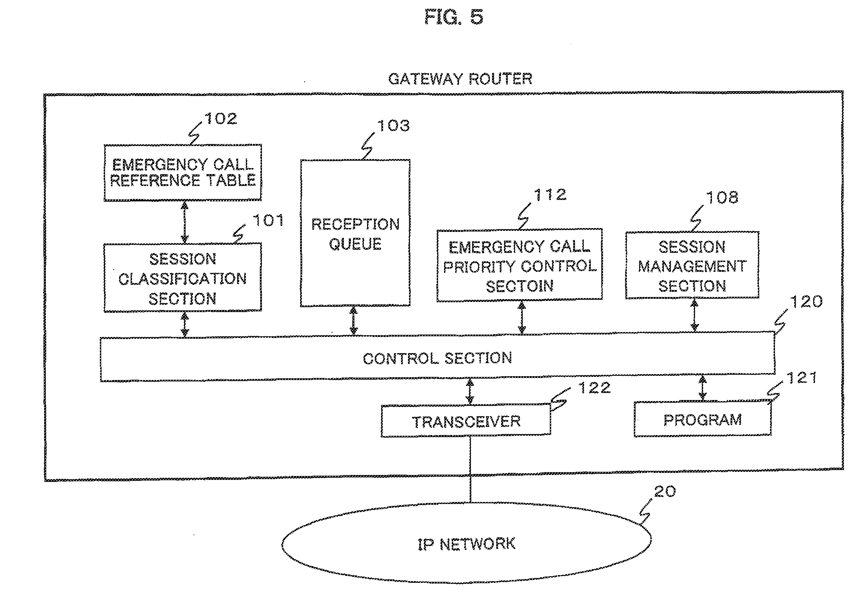

FIG. 5 is a block diagram showing a specific example of an implementation of the gateway router shown in FIG. 2. Here, the above-described various controls, such as the classification operation and the preferential control of an emergency call, are implemented by a control section 120, which controls the overall operation of the gateway router, executing corresponding programs 121. Note that in FIGS. 2 and 5, those blocks that have the same functions are denoted by the same reference numerals, and a description thereof will be omitted here.

The gateway router includes a transceiver 122 that connects to an IP network 20, which is typified by the Internet, to transmit and receive packets. As shown in FIG. 1A, the gateway router receives an INVITE request from a calling-side IP telephone terminal 10 and carries out the above-described session classification and preferential control of an emergency call. When the received INVITE request is a request for an emergency call and a session can be reserved, the gateway router transfers the INVITE request to a SIP server 14 and establishes a session between the calling-side IP telephone terminal 10 and a called-side IP telephone terminal 13.

### 5. Advantages

The gateway router according to the present exemplary embodiment described above has the following advantages. First, an emergency call is always preferentially recognized to establish a session because the general call temporary storage section 105 of the reception queue 103 is not checked until all the emergency calls in the emergency call temporary storage section 104 are pulled out. In this event, since allocation of available sessions to emergency and general calls is dynamically performed, there is no need to secure respective bandwidths for emergency calls and for general calls in advance, and it is possible to preferentially connect an emergency call automatically upon arrival of the emergency call.

Moreover, when the number of established sessions has reached the maximum number of sessions that can be simultaneously connected by the gateway router, it is possible to preferentially connect an emergency call because a general-call session that is being connected is selected and disconnected.

Furthermore, since the session classification section 101 classifies an INVITE packet by referring to the emergency call reference table 102, it is possible to classify, as emergency calls, not only calls to the police and the fire department but also calls to the telephone numbers of a hospital, a government agency, and the like designated by an administrator. Accordingly, an effective and flexible preferential connection of an emergency call is possible.

The present invention can be applied to gateway routers in IP telephony systems. For example, the present invention can be applied to a session border controller (SBC) in a next generation network.

The present invention may be embodied in other specific forms without departing from the spirit or essential characteristics thereof. The above-described exemplary embodiment and example are therefore to be considered in all respects as illustrative and not restrictive, the scope of the invention being indicated by the appended claims rather than by the foregoing description, and all changes which come within the meaning and range of equivalency of the claims are therefore intended to be embraced therein.

**An examplary embodiment is summarized as follows.**

A gateway router in an IP telephony system includes a determination section which determines whether or not an arriving session control signal is of an emergency call, and a controller which dynamically assigns to emergency calls and other general calls a predetermined number of sessions that can be simultaneously connected and thereby performs control such that connection processing is carried out preferentially for a session control signal of an emergency call.

## Claims

1. A gateway device in an Internet Protocol telephony system, comprising:
a determination section (101) for determining whether a received session control signal is of an emergency call; and
a controller (107, 108, 111, 112) for dynamically assigning a predetermined number of simultaneously available sessions to emergency calls and general calls other than the emergency calls so as to preferentially perform connection of a received session control signal of an emergency call.

2. The gateway device according to claim 1, wherein, when the received session control signal of the emergency call occurs in a state that a number of already connected sessions has reached the predetermined number of simultaneously available sessions, the controller preferentially performs connection of the received session control signal of the emergency call by disconnecting at least one already connected session for general call.

3. The gateway device according to claim 1 or 2, further comprising:
a reception queue (103, 104, 105) for separately storing session control signals for emergency calls and session control signals for general calls,
wherein, if any session control signal of an emergency call is stored in the reception queue, the controller places a high priority on establishment of a session for the emergency call.

4. A priority control method for emergency calls in a gateway device for connecting a plurality of telephone terminals in an Internet Protocol telephony system, comprising:
determining whether a session control signal received from a telephone terminal is of an emergency call; and
preferentially connecting a received session control signal of the emergency call by dynamically assigning a predetermined number of simultaneously available sessions to emergency calls and general calls other than the emergency calls.

5. The priority control method according to claim 4, wherein, when a session control signal of the emergency call occurs in a state that a number of already connected sessions has reached the predetermined number of simultaneously available sessions, the received session control signal of the emergency call is preferentially connected by disconnecting at least one already connected session for general call.

6. The priority control method according to claim 4 or 5, further comprising:
separately storing session control signals of emergency call and session control signals of general calls,
wherein if any session control signal of an emergency call is stored in the reception queue, then a high priority is placed on establishment of a session for the emergency call.

7. An Internet Protocol telephony system comprising a gateway router which includes the gateway device according to claim 1 or 2.

8. An Internet Protocol telephony system comprising a gateway device which performs the priority control method according to claim 4 or 5.

9. A program instructing a computer to function as a gateway device in an Internet Protocol telephony system, comprising:
determining whether a received session control signal is of an emergency call; and
dynamically assigning a predetermined number of simultaneously available sessions to emergency calls and general calls other than the emergency calls so as to preferentially perform connection of a received session control signal of the emergency call.

10. The program according to claim 9, wherein, when the received session control signal of the emergency call occurs in a state that a number of already connected sessions has reached the predetermined number of simultaneously available sessions, the controller preferentially performs connection of the received session control signal of the emergency call by disconnecting at least one already connected session for general call.
